(19) Europäisches Patentamt
European Patent Office
Office européen des brevets

(11) EP 1 444 281 B1

(12) **EUROPEAN PATENT SPECIFICATION**

(45) Date of publication and mention of the grant of the patent:
**17.03.2010 Bulletin 2010/11**

(21) Application number: **02789634.9**

(22) Date of filing: **14.11.2002**

(51) Int Cl.:
***C08G 18/10*** *(2006.01)* ***C08G 18/75*** *(2006.01)*
***G02B 1/04*** *(2006.01)*

(86) International application number:
**PCT/US2002/036471**

(87) International publication number:
**WO 2003/044071 (30.05.2003 Gazette 2003/22)**

(54) **IMPACT RESISTANT POLYUREAURETHANE AND METHOD OF PREPARATION**

KERBSCHLAGZÄHE POLYHARNSTOFFURETHANE UND VERFAHREN ZUR HERSTELLUNG

POLY-UREE-URETHANNE RESISTANT AUX CHOCS ET PROCEDE DE PREPARATION ASSOCIE

(84) Designated Contracting States:
**AT BE BG CH CY CZ DE DK EE ES FI FR GB GR IE IT LI LU MC NL PT SE SK TR**

(30) Priority: **16.11.2001 US 332827 P**
**05.11.2002 US 287880**

(43) Date of publication of application:
**11.08.2004 Bulletin 2004/33**

(73) Proprietor: **PPG Industries Ohio, Inc.**
**Cleveland, OH 44111 (US)**

(72) Inventors:
- **NAGPAL, Vidhu, J.**
  **Murrysville, PA 15668 (US)**
- **MCDONALD, William, H.**
  **Cranberry Township, PA 16066 (US)**
- **SMITH, Robert, A.**
  **Murrysville, PA 15668 (US)**

(74) Representative: **Polypatent**
**Postfach 40 02 43**
**51410 Bergisch Gladbach (DE)**

(56) References cited:
**EP-A- 1 197 505**
**WO-A-00/14137**
**WO-A-00/17249**
**US-A- 3 866 242**
**US-A- 4 208 507**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to a polyether-containing polyureaurethane.

In general, an optically transparent plastic material is characterized by its impact resistance, and the temperature and pressure at which the material undergoes distortion.

There is a need for a polyureaurethane having a high impact resistance.

It is noted that, as used in this specification and the appended claims, the singular forms "a," "an," and "the" include plural referents unless expressly and unequivocally limited to one referent.

For the purposes of this specification, unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

The present invention includes a polyether-containing polyureaurethane, said polyether-containing polyureaurethane when at least partially cured and when tested as a lens with a hard coating on both surfaces having a maximum center thickness of 2.2 mm in a plano configuration, has an impact resistance of at least 148 feet per second as defined by The High Impact Test.

Further, the present invention includes a polyether-containing polyureaurethane comprising the reaction product of:

a) a prepolymer comprising a polyisocyanate and at least one polyether-containing polyol wherein said polyether polyol comprises a block copolymer of the following formula:

$$H\text{-}O\text{-}(CRRCRR\text{-}Y_n\text{-}O)_a\text{-}(CRRCRR\text{-}Y_n\text{-}O)_b(CRRCRR\text{-}Y_n\text{-}O)_cH$$

wherein R represents hydrogen or $C_1$-$C_6$ alkyl; Y represents $CH_2$; n is an integer from 0 to 6; a, b, and c each are an integer from 0 to 300, wherein a, b and c are chosen such that the weight average molecular weight of the polyol does not exceed 32,000.; and

b) an amine-containing curing agent,

wherein said prepolymer has a NCO/OH equivalent ratio of from 2.0 to less than 4.5.

Further, the present invention includes a method of preparing a polyether-containing polyureaurethane comprising the steps of:

a) reacting a polyisocyanate with at least one polyether-containing polyol wherein said polyether polyol comprises a block copolymer of the following formula:

$$H\text{-}O\text{-}(CRRCRR\text{-}Y_nO)_a\text{-}(CRRCRR\text{-}Y_nO)_b\text{-}(CRRCRR\text{-}Y_nO)_c\text{-}H$$

wherein R represents hydrogen or $C_1$-$C_6$ alkyl; Y represents $CH_2$; n is an integer from 0 to 6; a, b, and c each are an integer from 0 to 300. wherein a, b and c are chosen such that the weight average molecular weight of the polyol does not exceed 32,000 to form a polyether-containing polyurethane prepolymer; and

b) reacting said prepolymer with an amine-containing curing agent,

wherein said prepolymer has a NCO/OH equivalent ratio of from 2.0 to less than 4.5.

In non-limiting embodiments, the polyether-containing polyureaurethane of the present invention can be used for transparency applications such as architectural glazings, vehicle glazings, riot shields, aircraft canopies, face masks, visors, opthalmic and sun lenses, protective eyewear, and transparent armor. It has been found that the polyether-coniaining polyureaurethane of the present invention can demonstrate at least one of the following characteristics: optical clarity, good ballistic properties, good chemical resistance, and acceptable heat distortion temperatures.

Polyisocyanates useful in the preparation of the polyureaurethane of the present invention are numerous and widely varied. Non-limiting examples can include but are not limited to aliphatic polyisocyanates, cycloaliphatic polyisocyanates wherein one or more of the isoycanato groups are attached directly to the cycloaliphatic ring, cycloaliphatic polyisocyanates wherein one or more of the isocyanato groups are not attached directly to the cycloaliphatic ring, aromatic polyisocyanates wherein one or more of the isocyanato groups are attached directly to the aromatic ring, and aromatic polyisocyanates wherein one or more of the isocyanato groups are not attached directly to the aromatic ring, and mixtures thereof. In a non-limiting embodiment, when an aromatic polyisocyanate is used, generally care should be taken to select a material that does not cause the polyureaurethane to color (e.g., yellow).

In alternate non-limiting embodiments of the present invention, the polyisocyanate can include but is not limited to aliphatic or cycloaliphatic diisocyanates, aromatic diisocyanates, cyclic dimers and cyclic trimers thereof, and mixtures thereof. Non-limiting examples of suitable polyisocyanates can include but are not limited to Desmodur N 3300 (hexamethylene diisocyanate trimer) which is commercially available from Bayer; Desmodur N 3400 (60% hexamethylene diisocyanate dimer and 40% hexamethylene diisocyanate trimer). In a non-limiting embodiment, the polyisocyanate can include dicyclohexylmethane diisocyanate and isomeric mixtures thereof. As used herein and the claims, the term "isomeric mixtures" refers to a mixture of the cis-cis, trans-trans, and cis-trans isomers of the polyisocyanate. Non-limiting examples of isomeric mixtures for use in the present invention can include the trans-trans isomer of 4,4'-methylenebis (cyclohexyl isocyanate), hereinafter referred to as "PICM" (paraisocyanato cyclohexylmethane), the cis-trans isomer of PICM, the cis-cis isomer of PICM, and mixtures thereof.

Suitable isomers for use in the present invention include but are not limited to the following three isomers of 4,4'-methylenebis(cyclohexyl isocyanate).

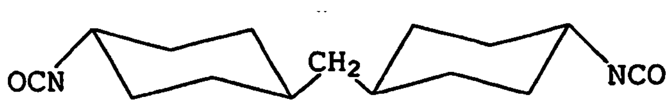

trans, trans

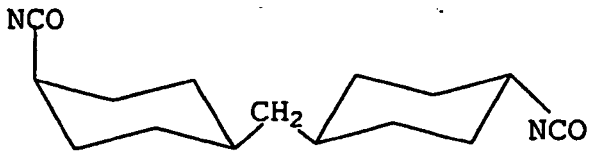

cis, trans

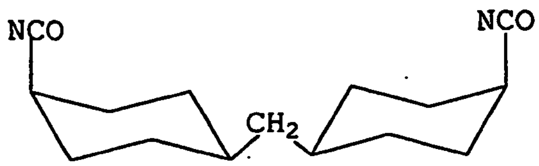

cis, cis

In one non-limiting embodiment, the PICM used in this invention can be prepared by phosgenating 4,4'-methylenebis(cyclohexyl amine) (PACM) by procedures well known in the art such as the procedures disclosed in United States Patents 2,644,007; 2,680,127; and 2,908,703; which are incorporated herein by reference. The PACM isomer mixtures, upon phosgenation, can produce PICM in a liquid phase, a partially liquid phase, or a solid phase at room temperature. In alternate non-limiting embodiments, the PACM isomer mixtures can be obtained by the hydrogenation of methylenedianiline and/or by fractional crystallization of PACM isomer mixtures in the presence of water and alcohols such as methanol and ethanol.

Additional aliphatic and cycloaliphatic diisocyanates that can be used in alternate non-limiting embodiments of the present invention include 3-isocyanatomethyl-3,5,5-trimethyl cyclohexyl-isocyanate ("IPDI") which is commercially available from Arco Chemical, and meta-tetramethylxylene diisocyanate (1,3-bis(1-isocyanato-1-methylethyl)-benzene) which is commercially available from Cytec Industries Inc. under the tradename TMXDI.RTM. (Meta) Aliphatic Isocyanate.

As used herein and the claims, the term "aliphatic and cycloaliphatic diisocyanates" refers to 6 to 100 carbon atoms linked in a straight chain or cyclized having two diisocyanate reactive end groups. In a non-limiting embodiment of the present invention, the aliphatic and cycloaliphatic diisocyanates for use in the present invention can include TMXDI and compounds of the formula $R\text{-}(NCO)_2$ wherein R represents an aliphatic group or a cycloaliphatic group.

The polyether-containing polyol comprises block polymers including blocks of ethylene oxide-propylene oxide

and/or ethylene oxide-butylene oxide. The polyether-containing polyol comprises a block polymer of the following chemical formula:

$$HO\text{-}(CRRCRR\text{-}Y_nO)_a\text{-}(CRRCRR\text{-}Y_n\text{-}O)_b\text{-}(CRRCRR\text{-}Y_nO)_cH$$

wherein R can represent hydrogen or $C_1$-$C_6$ alkyl; Y can represent $CH_2$; n can be an integer from 0 to 6; a, b, and c can each be an integer from 0 to 300, wherein a, b and c are chosen such that the weight average molecular weight of the polyol does not exceed 32,000..

In a further non-limiting embodiment, Pluronic R, Pluronic L62D, Tetronic R and Tetronic, which are commercially available from BASF, can be used as the polyether-containing polyol material in the present invention.

In the present invention, the equivalent ratio of NCO (i.e., isocyanate) to OH present in the polyether-containing polyureaurethane prepolymer can be an amount of from 2.0 to less than 4.5 NCO/1.0 OH.

Suitable amine-containing curing agents for use in the present invention are numerous and widely varied. Non-limiting examples include but are not limited to polyamines having more than one amino group per molecule, each amino group being independently selected from primary amino ($-NH_2$) and secondary amine (-NH-) groups. In alternate non-limiting embodiments, the amine-containing curing agent can be chosen from aliphatic polyamines, cycloaliphatic polyamines, aromatic polyamines, and mixtures thereof. In a further non-limiting embodiment, the amino groups are all primary groups. In an embodiment wherein it is desirable to produce a polyureaurethane having low color, the amine-curing agent can be chosen such that it has relatively low color and/or it can be manufactured and/or stored in a manner as to prevent the amine from developing a color (e.g., yellow).

Suitable amine-containing curing agents for use in the present invention includes but are not limited to materials having the following chemical formula:

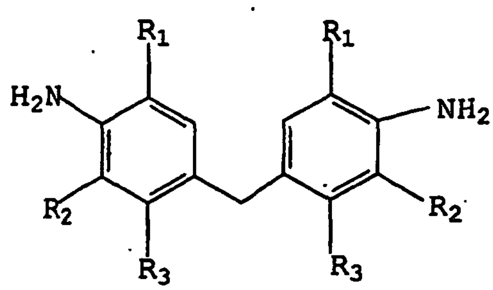

wherein $R_1$ and $R_2$ can each be independently chosen from methyl, ethyl, propyl, and isopropyl groups, and $R_3$ can be chosen from hydrogen and chlorine. Non-limiting examples of amine-containing curing agents for use in the present invention include the following compounds, manufactured by Lonza Ltd. (Basel, Switzerland):

LONZACURE.RTM. M-DIPA: $R_1=C_3H_7$; $R_2=C_3H_7$; $R_3=H$
LONZACURE.RTM. M-DMA: $R_1=CH_3$; $R_2=CH_3$; $R_3=H$
LONZACURE.RTM. M-MEA: $R_1=CH_3$; $R_2=C_2H_5$; $R_3=H$
LONZACURE.RTM. M-DEA: $R_1=C_2H_5$; $R_2=C_2H_5$; $R_3=H$
LONZACURE.RTM. M-MIPA: $R_1=CH_3$; $R_2=C_3H_7$; $R_3=H$
LONZACURE.RTM. M-CDEA: $R_1=C_2H_5$; $R_2=C_2H_5$; $R_3=Cl$

wherein $R_1$, $R_2$ and $R_3$ correspond to the aforementioned chemical formula.

In a non-limiting embodiment, the amine-containing curing agents includes but is not limited to a diamine curing agent such as 4,4'-methylenebis(3-chloro-2,6-diethylaniline), (Lonzacure.RTM. M-CDEA), which is available in the United States from Air Products and Chemical, Inc. (Allentown, Pa.). In alternate non-limiting embodiments, the amine-containing curing agent for use in the present invention can include 2,4-diamino-3,5-diethyl-toluene, 2,6-diamino-3,5-diethyl-toluene and mixtures thereof (collectively "diethyltoluenediamine" or "DETDA"), which is commercially available from Albemarle Corporation under the trade name Ethacure 100; dimethylthiotoluenediamine (DMTDA), which is commercially available from Albemarle Corporation under the trade name Ethacure 300; 4,4'-methylene-bis-(2-trade name MOCA. DETDA can be a liquid at room temperature with a viscosity of 156 cPs at 25°C. DETDA can be isomeric, with the 2,4-isomer range being from 75 to 81 percent while the 2,6-isomer range can be from 18 to 24 percent.

In a non-limiting embodiment, the color stabilized version of Ethacure 100 (i.e., formulation which contains an additive to reduce yellow color), which is available under the name Ethacure 100S. may be used in the present invention.

In another embodiment, the amine-containing curing agent for use in the present invention can be chosen from

DEDTA, compounds having the following structure

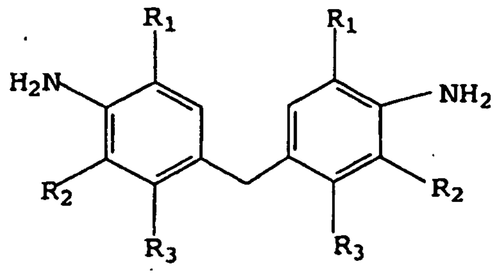

and mixtures thereof.

The polyureaurethane of the present invention can be prepared by one shot, quasi-prepolymer or full prepolymer methods, all of which are known in the art and disclosed in United States Patent 5,962,617; which disclosure is herein incorporated by reference. In the one shot method, all of the reactants can be mixed together at one time. In the quasi-prepolymer method, generally 30 to 80 percent of the total amount of polyol is reacted with the polyisocyanate to form a prepolymer, and then the remaining 20 to 70 percent of the polyol can be added to the prepolymer with the amine-containing curing agent. In alternate non-limiting embodiments, a polyisocyanate (i.e., NCO) can be mixed with a polyether-containing polyol material in an equivalent ratio of from greater than 1 to less than 4.5 NCO/1.0 OH, or from 2.0 to 4.0 NCO/1.0 OH, and heated to a temperature within the range of from 88°C-149°C (190°F to 300°F). The period of time for heating the mixture can vary greatly. In general, at lower temperatures the mixture can be heated for a longer period of time than can be employed at higher temperatures. For example, at a temperature of from 127-129°C (260 to 265°F) the mixture can be heated for 5 to 10 hours, and at a temperature of from 135-143°C (275 to 290°F), for a period of 3 to 5 hours. In a non-limiting embodiment, the mixture can be heated under dry nitrogen to facilitate the reaction of the polyisocyanate with the polyether-containing polyol material to form a prepolymer. The heat source can then be removed and the prepolymer can be cooled. In a further non-limiting embodiment, the prepolymer can be cooled to a temperature of 71°C (160°F). The prepolymer can be maintained at that temperature for 24 hours. Following cooling, the amount of NCO present in the prepolymer can be determined by a variety of methods known in the art. In one non-limiting embodiment, the NCO present in the prepolymer then can be determined by a variety of methods known in the art such as ASTM-D-2572-91.

In a non-limiting embodiment of the present invention, the NCO present in the prepolymer can be determined as follows. A 2-gram sample of the polyureaurethane can be added to an Erlenmeyer flask. The sample can be purged with nitrogen and several glass beads (5mm) then can be added. To this mixture can be added 20 mL of 1N dibutylamine (in toluene) with a pipet. The mixture can be swirled and capped. The flask then can be placed on a heating source and the flask can be heated to slight reflux, held for 15 minutes at this temperature and then cooled to room temperature. A piece of Teflon can be placed between the stopper and joint to prevent pressure buildup while heating. During the heating cycle, the contents can be frequently swirled in an attempt for complete solution and reaction. Blank values can be obtained and determined by the direct titration of 20 mL of pipeted 1N dibutylamine (DBA) plus 50 mL of methanol with 1N hydrochloric acid (HCl) using the Titrino 751 dynamic autotitrator. The average values for the HCl normalities and DBA blanks can be calculated, and the values can be programmed into the autotitrator. After the sample has cooled, the contents can be transferred into a beaker with approximately 50 to 60 mL of methanol. A magnetic stirring bar can be added and the sample can be titrated with 1N HCl using a preprogrammed Titrino 751 autotitrator. The percent NCO and IEW (isocyanate equivalent weight) can be calculated in accordance with the following formulas:

$$\%NCO = (\text{mLs blank} - \text{mLs sample})(\text{Normality HCl})(4.2018)/\text{sample wt., grams};$$

$$IEW = (\text{sample wt., grams})1000/(\text{mLs blank} - \text{mLs sample})(\text{Normality HCl}).$$

The "Normality HCl" value can be determined as follows. To a pre-weighed beaker can be added 0.4 grams of $Na_2CO_3$ primary standard and the weight can be recorded. To this can be added 50 mL of deionized water and the $Na_2CO_3$ can be dissolved with magnetic stirring. The Titrino 751 autotitrator can be used to titrate the primary standard

with the 1N HCl and the volume can be recorded. This procedure can be repeated two additional times for a total of three titrations and the average can be used as the normality according to the following formula:

$$\text{Normality HCl} = \text{standard wt., grams/(mLs HCl)(0.053).}$$

In a non-limiting embodiment, additional polyisocyanate can be added to the prepolymer to achieve a different (e.g., higher or lower) equivalent weight of NCO/OH. The prepolymer can then be reacted at a temperature of from 71-82°C (160°F to 180°F), with an amine-containing curing agent such as a diamine curing agent. In alternate non-limiting embodiments, the amine-containing curing agent can be present in an equivalent ratio of from 0.60 to 1.20 $NH_2$ /1.0 NCO, or 0.90 to 1.0 $NH_2$ /1.0 NCO, or 0.92 to $NH_2$ /1.0 NCO. The polyureaurethane can then be cured at a temperature of from 110-149°C (230 to 300°F) for a period of from 4 to 24 hours.

In a non-limiting embodiment, the polyether-containing polyureaurethane prepolymer can be prepared by reacting an excess amount of polyisocyanate with a polyether-containing polyol material at a temperature of 130°C or less, to produce a free-flowing prepolymer. As used herein and the claims, the term "free-flowing" refers to a non-gelled substance. Heating the prepolymer to a temperature above 130°C can accelerate the reaction rate between the polyisocyanate and the polyether-containing polyol material, which can result in premature gelation of the prepolymer and subsequent polyureaurethane. In regards to a lens casting process, premature gelation of the prepolymer and subsequent polyureaurethane, can produce a defective lens.

In alternate non-limiting embodiments, the polyisocyanate can be present in excess with the polyether-containing polyol material to produce a prepolymer having a viscosity of less than 2000 cPs, or less than 600 cPs, or less than 300 cPs, as measured using a Brookfield Viscosmeter at a temperature of 73°C. The excess amount of polyisocyanate used can be from 2.0 to less than 4.5 NCO/1.0 OH equivalent ratio. The viscosity of the prepolymer can be dependent on the particular polyisocyanate and polyether-containing polyol material chosen. In a non-limiting embodiment, a mixture having a NCO/OH equivalent ratio at the higher end of the aforementioned range, can form a prepolymer having a viscosity within the lower end of the aforementioned range.

Suitable urethane-forming catalysts can be used in the present invention to enhance the reaction of the polyurethane-forming materials. Suitable urethane-forming catalysts can be those catalysts that are specific for the formation of urethane by reaction of the NCO and OH-containing materials, and which have little tendency to accelerate side reactions leading to allophonate and isocyanate formation. Non-limiting examples of suitable catalysts can be chosen from the group of Lewis bases, Lewis acids and insertion catalysts as described in Ullmann's Encyclopedia of Industrial Chemistry, 5th Edition, 1992, Volume A21, pp. 673 to 674. In a non-limiting embodiment, the catalyst can be a stannous salt of an organic acid, such as but not limited to stannous octoate, dibutyl tin dilaurate, dibutyl tin diacetate, dibutyl tin mercaptide, dibutyl tin dimaleate, dimethyl tin diacetate, dimethyl tin dilaurate, 1,4-diazabicyclo[2.2.2]octane, and mixtures thereof. In alternate non-limiting embodiments, the catalyst can be zinc octoate, bismuth, or-ferric acetylacetonate.

Further non-limiting examples of suitable catalysts can include tertialy amines such as but not limited to triethylamine, triisopropylamine and N,N-dimethylbenzylamine. Such suitable tertiary amines are disclosed in United States Patent 5,693,738 at column 10, lines 6-38, the disclosure of which is incorporated herein by reference.

In a non-limiting embodiment, the catalyst can be incorporated into the amine-containing curing agent. The amount of catalyst can vary widely depending on the particular catalyst chosen. In alternate non-limiting embodiments, the amount of catalyst can be less than 5% by weight, or less than 3% by weight, or less than 1% by weight, based on the total weight of the reaction mixture. For example, dibutyltin dilaurate can be employed in amounts of from 0.0005 to 0.02 parts per 100 parts of the polyurethane-forming materials. The amount of catalyst used can be dependent on the curing temperature employed.

The polyether-containing polyureaurethane of this invention can be formed into an article by a variety of methods including but not limited to casting, compression molding, extruding or injection molding. In a non-limiting embodiment, the polyether-containing polyureaurethane can be cast into lenses. Casting of the polyether-containing polyureaurethane can produce a lens having good optical characteristics.

In a non-limiting embodiment of the casting process, the polyether-containing polyureaurethane prepolymer and amine-containing curing agent mixture can be cast into a mold prior to curing. In a further non-limiting embodiment, the polyether-containing polyureaurethane of the invention can be partially cured, by choosing an appropriate curing time and temperature, and then the polyether-containing polyureaurethane can be removed from the casting molds and formed into a desired shape. The polyether-containing polyureaurethane can be formed into a simple or complex shape and can then be fully cured.

The lens can be coated on the front side and/or backside with an abrasion-resistant coating such as an organosilane-type abrasion-resistant coating that is known in the art to protect plastic surfaces from abrasions and scratches. Organo-silane abrasion-resistant coatings can be referred to as hard coats and are known in the art. Various organo-silane hard coatings are disclosed in United States Patent 4,756,973 at column 5, lines 1-45; and United States Patent 5,462,806 at column 1, lines 58 through column 2, line 8 and column 3, line 52 through column 5, line 50.

Further non-limiting examples of organo-silane hard coatings are disclosed in United States Patents 4,731,264; 5,134,191; and 5,231,156. In a non-limiting embodiment, the frontside and backside of the lens can be coated with SDC 1154 which is commercially available from SDC Coatings, Incorporated or HiGard 1080 which is commercially available from PPG Industries, Incorporated.

Other coatings that provide abrasion and scratch resistance, such as polyfunctional acrylic hard coatings, melamine-based hard coatings, urethane-based hard coatings, alkyl-based coatings, silica sol-based hard coatings or other organic or inorganic/organic hybrid hard coatings can be used as the abrasion-resistant coating.

In a further non-limiting embodiment, additional coatings such as antireflective coatings can be applied to the hard coat layer. Examples of antireflective coatings are described in United States Patent 6,175,450. In a non-limiting embodiment, the front side and/or backside of the lens can be coated with Essilor's Reflection Free anti-reflective coating which can be applied using Essilor's Reflection Free Process.

In a non-limiting embodiment, front side and/or backside of the lens can be coated with an ultraviolet light curable hardcoat such as but not limited to UVX and UVNVS which are commercially available from UltraOptics.

In general, the impact resistance of an uncoated lens can be higher than the impact resistance of a coated lens. The application of a hard coat to the lens can result in a decrease in the impact strength of the lens. The impact strength can be further decreased by the application of an antireflective coating onto the hard coated lens. The amount of decrease in the impact strength can be dependent on the particular hard and antireflective coatings selected for application to the lens.

The polyether-containing polyureaurethane of the present invention can have a good impact resistance. In alternate non-limiting embodiments, the polyether-containing polyureaurethane when at least partially cured and tested as a lens having a thickness of from 2.0 to 2.2 mm and having a hard coating on both surfaces, can withstand an impact of at least 52 mg (170 feet) per second, or at least 91 m (300 feet) per second, as measured by the High Impact Test. As used herein and the claims, the "High Impact Test" refers to the following procedure which is conducted in accordance with Z87.1-200X, September 12, 2002, Committee Ballot Draft Revision of ANSI Z87.1-1989 (R1998), sections 7.5.2.1 "High Velocity Impact" and 14.3 "Test for High Impact Prescription Lenses". A Universal Lens Tester (ULT-II) as manufactured by International Certification Services Laboratories, Incorporated is used in the procedure. Plano power lenses having a maximum base curve of 6.25 can be edged round with an industrial safety bevel to a diameter of 55 mm +0.04 mm/-0.25 mm. Each lens can be tested once with a new lens being used for each additional impact. Each lens can be mounted in a test holder such that the test lens is held firmly against the bevel of the lens holder. The high velocity impact test includes propelling a missile at a velocity of 46 m (150 feet) per second on the center of each lens. The missile consists of a 6.35 mm (0.25 inch) steel ball weighing 1.06 gram (0.037 ounce). The test can be repeated with two additional sample lenses. The lens can be considered to have failed the test if there is any posterior displacement of the lens completely through the test holder; any fracture of the lens; any detachment of a portion of the lens from its inner surface; or any full thickness penetration of a lens. As used herein, "fracture" refers to a crack through the entire thickness of the lens into two or more separate pieces, or detachment from the inner surface of any lens material visible to the naked eye. Failure of any one lens constitutes a failure. If all test lenses pass, then any prescription lens of the same or greater thickness at its thinnest point, which is made by the same manufacturer, from the same material, with the same coatings and processes can bear a "+" mark.

In a non-limiting embodiment, small amounts of at least one tri-functional or higher functional polyol such as but not limited to a triol, tetrol, pentrol and mixtures thereof can be added to the polyether-containing polyureaurethane prepolymer in an amount sufficient to produce cross-linking based upon equivalents of reactants. In a further non-limiting embodiments, at least one of these materials is added to produce at least 0.01 percent, or at least 0.5 percent, or less than 99 percent, or less than 5 percent cross-linking by weight based on the total reactants. Suitable non-limiting examples include trimethylol propane, trimethylol ethane, glycerine, pentaerytheritol, dipentaerytheritol, sorbitol, sucrose, mannitol, and mixtures thereof. Further non-limiting examples include these materials chain extended with ethylene, propylene or butylenes oxide. The addition of at least one of these materials to the prepolymer can increase the heat distortion temperature and in some cases can improve the ballastic properties of the cured polyurethane.

In alternate non-limiting embodiments of the present invention, a variety of additives known in the art can be utilized in preparation of the polyether-containing polyureaurethane of the present invention. Non-limiting examples include various anti-oxidants, ultraviolet stabilizers, color blockers, optical brightners, and mold release agents. In one non-limiting embodiment, at least one anti-oxidant can be added to the prepolymer in an amount of 5% or less by weight based on the total reactants. Suitable anti-oxidants that can be used in the present invention include but are not limited to those of the multifunctional hindered phenol type. One non-limiting example of a multifunctional hindered phenol type anti-oxidant can include Irganox 1010 which is commercially available from Ciba Geigy.

In alternate non-limiting embodiments, a UV-stabilizer can be added to the polyether-containing polyureaurethaneprepolymer, either prior to or during the curing, step, in an amount of 5.0% or less by weight based on the total

reactants, or from 0.5 to 4.0% by weight based on the total reactants. Suitable UV-stabilizers for use in the present invention include but are not limited to benzotriazoles. Non-limiting examples of benzotriazole UV-stabilizers include Cyasorb 5411, Cyasorb 3604, and Tinuvin 328. Cyasorb 5411 and 3604 are commercially available from American Cyanamid, and Tinuvin 328 is commercially available from Ciba Geigy.

In an alternate non-limiting embodiment, a hindered amine light stabilizer can be added to enhance UV protection. A non-limiting example of a hindered amine light stabilizer can include Tinuvin 765 which is commercially available from Ciba-Geigy.

The polyether-containing polyureaurethane of the present invention can be used in producing a photochromic article. United States Patent Applications having Serial Nos. 09/793,886 and 09/794,026 both filed on March 20, 2000 and pending in the United States Patent and Trademark Office, disclose the production of photochromic articles.

When used to prepare photochromic articles, e.g., lenses, the polyureaurethane should be transparent to that portion of the electromagnetic spectrum which activates the photochromic substance(s) incorporated in the matrix, i.e., that wavelength of spectrum which activates the photochromic substance(s) incorporated in the matrix, i.e., that wavelength of ultraviolet (UV) light that produces the colored or open form of the Photochromic substance and that portion of the visible spectrum that includes the absorption maximum wavelength of the photochromic substance in its UV activated form, i.e., the open form. Photochromic substances that may be utilized with the polyureaurethane of the present invention are organic photochromic compounds or substances containing same that may be incorporated, e.g., dissolved, dispersed or diffused into such polyureaurethane.

A first group of organic photochromic substances contemplated for use to form the photochromic articles of the present invention are those having an activated absorption maximum within the visible range of greater than 590 nanometers, e.g., from 590 to 700 nanometers. These materials typically exhibit a blue, bluish-green, or bluish-purple color when exposed to ultraviolet light in an appropriate solvent or matrix. Non-limiting examples of classes of such substances that are useful in the present invention include but are not limited to spiro(indoline)naphthoxazines and spiro (indoline)benzoxazines. These and other classes of such photochromic substances are known. See, for example, U.S. Patents: 3,562,172; 3,578,602; 4,215,010; 4,342,668; 5,405,958; 4,637,698; 4,931,219; 4,816,584; 4,880,667; 4,818,096.

A second group of organic photochromic substances contemplated for use to form the photochromic articles of the present invention are those having at least one absorption maximum and two absorption maxima, within the visible range of between 400 and less than 500 nanometers. These materials typically exhibit a yellow-orange color when exposed to ultraviolet light in an appropriate solvent or matrix. Such compounds include but are not limited to certain chromenes, i.e., benzopyrans and naphthopyrans. Many of such chromenes are known, e.g., U.S. Patents 3,567,605; 4,826,977; 5,066,818; 4,826,977; 5,066,818; 5,466,398; 5,384,077; 5,238,931; and 5,274,132.

A third group of organic photochromic substances contemplated for use to form the photochromic articles of the present invention are those having an absorption maximum within the visible range of between 400 to 500 nanometers and another absorption maximum within the visible range of between 500 to 700 nanometers. These materials typically exhibit color(s) ranging from yellow/brown to purple/gray when exposed to ultraviolet light in an appropriate solvent or matrix. Non-limiting examples of these substances include certain benzopyran compounds, having substituents at the 2-position of the pyran ring and a substituted or unsubstituted heterocyclic ring, such as a benzothieno or benzofurano ring fused to the benzene portion of the benzopyran. Such materials are described in U.S. Patent No. 5,429,774.

Other photochromic substances contemplated include photochromic organo-metal dithizonates, i.e., (arylazo)-thioformic arylhydrazidates, e.g., mercury dithizonates which are described in, for example, U.S. Patent 3,361,706. Fulgides and fulgimides, e.g. the 3-furyl and 3-thienyl fulgides and fulgimides which are described in U.S. Patent 4,931,220 at column 20, line 5 through column 21, line 38.

The disclosures relating to such photochromic substances in the aforedescribed patents are incorporated herein by reference. The photochromic articles of the present invention may contain one photochromic substance or a mixture of photochromic substances. Mixtures of photochromic substances may be used to attain certain activated colors such as a near neutral gray or brown.

Each of the photochromic substances described herein may be used in amounts and in a ratio (when mixtures are used) such that a polyurethane/polymerizate to which the mixture of compounds is applied or in which they are incorporated exhibits a desired resultant color, e.g., a substantially neutral color such as shades of gray or brown when activated with unfiltered sunlight, i.e., as near a neutral color as possible given the colors of the activated photochromic substances. The relative amounts of the aforesaid photochromic substances used will vary and depend in part upon the relative intensities of the color of the activated species of such compounds, and the ultimate color desired.

The photochromic compounds or substances described herein may be applied to or incorporated into a polyurethane/polymerizate by various methods described in the art. Such methods include but are not limited to dissolving or dispersing the substance within the polyurethane/polymerizate, e.g., imbibition of the photochromic substance into the polyurethane/polymerizate by immersion of the polyurethane/polymerizate in a hot solution of the photochromic substance or by thermal transfer; providing the photochromic substance as a separate layer between adjacent layers

of the polymerizate, e.g., as a part of a polymer film; and applying the photochromic substance as a coating or as part of a coating placed on the surface of the polyurethane/polymerizate. The term "imbibition" or "imbibe" is intended to mean and include permeation of the photochromic substance alone into the polyurethane/polymerizate, solvent assisted transfer absorption of the photochromic substance into a porous polymer, vapor phase transfer, and other such transfer mechanisms. One non-limiting example of an imbibing method includes the steps of coating the photochromic article with the photochromic substance; heating the surface of the photochromic article; and removing the residual coating from the surface of the photochromic article.

The amount of photochromic substance or composition containing the same applied to or incorporated into the polyurethane/polymerizate is not critical provided that a sufficient amount is used to produce a photochromic effect discernible to the naked eye upon activation. Generally such amount can be described as a photochromic amount. The particular amount used depends often upon the intensity of color desired upon irradiation thereof and upon the method used to incorporate or apply the photochromic substances. Typically, the more photochromic substance applied or incorporated, the greater is the color intensity. Generally, the amount of total photochromic substance incorporated into or applied to a photochromic optical polyurethane/polymerizate may range from 0.15 to 0.35 milligrams per square centimeter of surface to which the photochromic substance(s) is incorporated or applied.

It is also contemplated that photochromic substances can be added to the multi-component organic composition prior to polymerizing, e.g., cast curing, the composition. However, when this is done it is typical that the photochromic substance(s) be resistant to potentially adverse interactions with, for example, initiator(s) that may be present and / or the isocyanate, isothiocyante and amine groups of the first and second components. These adverse interactions can result in deactivation of the photochromic substance(s), e.g., by trapping them in either an open or closed form. Photochromic substances can also include photochromic pigments and organic photochromic substances encapsulated in metal oxides, the latter of which are described in U.S. Patents 4,166,043 and 4,367,170. Organic photochromic substances sufficiently encapsulated within a matrix of an organic polyurethane/polymerizate, as described in U.S. Patent 4,931,220, can also be incorporated into the multi-component composition of the present invention prior to curing. If photochromic substances are added to the multi-component organic composition of the present invention prior to curing, they are typically incorporated into the second component prior to mixing the first and second components together.

## EXAMPLES

In each of the following examples, the NCO concentration of Component A was determined using the following titrimetric procedure in accordance with ASTM-D-2572-91. The titrimetric method consisted of adding a 2 gram sample of Component A to an Erlenmeyer flask. This sample was purged with nitrogen and several glass beads (5mm) were then added. To this mixture was added 20 mL of 1N dibutylamine (in toluene) with a pipet. The mixture was swirled and capped. The flask was then placed on a heating source and the flask was heated to slight reflux, held for 15 minutes at this temperature and then cooled to room temperature. Note, a piece of Teflon was placed between the stopper and joint to prevent pressure buildup while heating. During the heating cycle, the contents were frequently swirled in an attempt for complete solution and reaction. Blank values were obtained and determined by the direct titration of 20 mL of pipeted 1N dibutylamine (DBA) plus 50 mL of methanol with 1N hydrochloric acid (HCl) using the Titrino 751 dynamic autotitrator. Once the average values for the HCl normalities and DBA blanks were calculated, the values were programmed into the autotitrator. After the sample had cooled, the contents were transferred into a beaker with approximately 50-60 mL of methanol. A magnetic stirring bar was added and the sample titrated with 1N HCl using the preprogrammed Titrino 751 autotitrator. The percent NCO and IEW (isocyanate equivalent weight) were calculated automatically in accordance with the following formulas:

**%NCO=(mLs blank-mLs sample)(Normality HCl)(4.2018)/sample wt., grams**

**IEW=(sample wt., grams)1000/(mLs blank-mLs sample)(Normality HCl).**

The "Normality HCl" value was determined as follows. To a pre-weighed beaker was added 0.4 grams of $Na_2CO_3$ primary standard and the weight was recorded. To this was added 50 mL of deionized water and the $Na_2CO_3$ was dissolved with magnetic stirring. An autotitrator (i.e., Metrohm GPD Titrino 751 dynamic autotitrator with 50 mL buret) equipped with a combination pH electrode (i.e., Metrohm combination glass electrode No. 6.0222.100), was used to titrate the primary standard with the 1N HCl and the volume was recorded. This procedure was repeated two additional times for

a total of three titrations and the average was used as the normality according to the following formula:

$$\text{Normality HCl} = \text{standard wt., grams/(mLs HCl)(0.053)}.$$

Further, in each of the following examples, the following lens casting process was used to produce six semi-finished lenses from the Component A prepolymer. Component A and DETDA (referred to as Component B) were injected into a specially designed molding machine from Max Machinery. The DETDA was obtained from Albemarle Corporation. The molding machine was a Urethane Processor, Model No. 601-000-232, which was obtained from Max Machinery in Healdsburg, California. Components A and B were added to the machine and mixed with high shear for a short period of time. Component B and Component A were present in a molar ratio of 0.95 to 1.0. The blended mixture was then injected into lens molds. The molds were placed in a convection oven for six hours at a temperature of 130°C. The cast semi-finished lenses were then removed from the oven and allowed to cool. The front side of the lens was coated with a commercial hard coat obtained from SDC Incorporated under the tradename of SDC 1154. The coating was applied by spinning the lens at 1100 rpm for 13 seconds using a spin with a commercial UV curable coating manufactured by UltraOptics under the tradename of UVX. These lenses were then sent to Essilor and were coated with Essilor's Reflection Free anti-reflective coating using Essilor's Reflection Free Process.

The cast lenses were than tested for impact strength by the High Impact Test. The "High Impact Test" refers to the following procedure which was conducted in accordance with Z87.1-200X, September 12, 2002, Committee Ballot Draft Revision of ANSI Z87.1-1989 (R1998), sections 7.5.2.1 "High Velocity Impact" and 14.3 "Test for High Impact Prescription Lenses". A Universal Lens Tester (ULT-II) as manufactured by International Certification Services Laboratories, Incorporated wais used in the procedure. Plano power lenses having a maximum base curve of 6.25 were edged round with an industrial safety bevel to a diameter of 55 mm +0.04 mm/-0.25 mm. Each lens was tested once with a new lens being used for each additional impact. Each lens was mounted in a test holder such that the test lens was held firmly against the bevel of the lens holder. The high velocity impact test included propelling a missile at a velocity of 46 m (150 feet) per second on the center of each lens. The missile consisted of a 6.35 mm (0.25 inch) steel ball weighing 1.06 gram (0.037 ounce). The lens was considered to have failed the test if there was any posterior displacement of the lens completely through the test holder; any fracture of the lens; any detachment of a portion of the lens from its inner surface; or any full thickness penetration of a lens. As used herein, "fracture" refers to a crack through the entire thickness of the lens into two or more separate pieces, or detachment from the inner surface of any lens material visible to the naked eye. Failure of any one lens constituted a failure.

Example 1 (comparative)

In a reactor vessel which contained a nitrogen blanket, 4.5 equivalents of 400 MW polycaprolactone, 0.58 equivalents of 750 MW polycaprolactone, 3.387 equivalents of trimethylol propane, 1.695 equivalents of Pluracol P2000 and 27.44 equivalents of Desmodur W were mixed together at room temperature. Desmodur W represents 4,4'-methylenebis(cyclohexyl isocyante) containing 20 weight percent of the trans-trans isomer and 80 weight percent of the cis-cis and cis-trans isomers. Desmodur W was obtained from Bayer Corporation and Pluracol P2000 was obtained from BASF. The reaction mixture was heated to a temperature of 78°C to obtain a substantially clear mixture. To this mixture was added 20 ppm dibutyltinlaureate catalyst and the heat was removed. The catalyst addition produced an exothermic reaction and the temperature began to rise and peaked at 123°C. The reaction was carried out with continuous stirring and allowed to cool under ambient conditions. At a temperature of about 116°C, the following materials were added: 0.5 wt% Irganox 1010 (obtained from Ciba Geigy), 2 wt% UV absorber Cyasorb 5411 (obtained from American Cyanamid/Cytec) and 1.5 ppm Exalite Blue 78-13 (obtained from Exciton). The mixture was stirred for an additional hour at 100°C and then allowed to cool to room temperature. This mixture was referred to as the Component A prepolymer. The isocyanate (NCO) concentration of the Component A prepolymer was determined in accordance with the procedure described above. The theoretical % NCO was determined to be 10.3 and the experimental % NCO was 10.1. The Component A prepolymer was then used in the lens casting process described above and the resultant lenses were high impact tested using the subject procedure described above. The lenses were able to withstand a maximum velocity of 46 m (150 feet) per second.

Example 2

The same procedure as described in Example 1 was used for Example 2 with the exception that 1.695 of Pluronic L62D was used in place of the Pluracol P2000. The theoretical % NCO was determined to be 10.3 and the experimental % NCO was 10.1. The Component A prepolymer was then used in the lens casting process described

above and the resultant lenses were high impact tested using the subject procedure described above. The lenses did not fail and/or fracture at a velocity of 300 feet per second.

Examples 3 (comparative)

The same procedure as described in Example 1 was used for Example 3, with the exception that a blend of 1.356 equivalents of Pluracol P2000 and 0.338 equivalents of Pluracol E2000 was used in place of the Pluracol P2000. The theoretical % NCO was determined to be 10.3 and the experimental % NCO was 9.02. The Component A prepolymer was then used in the lens casting process described above and the resultant lenses were high impact tested using the subject procedure described above. The lenses were able to withstand a maximum velocity of 42 m (137 feet) per second.

Example 4 (comparative)

The same procedure as described in Example 1 was used for Example 4, with the exception that 1.695 equivalents of Tone™ Polyol 0241 was used in place of the Pluracol P2000. The Component A prepolymer was used in the lens casting process described above and the resultant lenses were high impact tested using the subject procedure described above. The lenses were able to withstand a maximum velocity of 45 m (146 feet) per second.

## Claims

1. A polyether-containing polyureaurethane comprising the reaction product of:

    a) a prepolymer comprising a polyisocyanate and at least one polyether-containing polyol wherein said polyether polyol comprises a block copolymer of the following formula:

    $$H\text{-}O\text{-}(CRRCRR\text{-}Y_n\text{-}O)_a\text{-}(CRRCRR\text{-}Y_n\text{-}O)_b\text{-}(CRRCRR\text{-}Y_n\text{-}O)_c\text{-}H$$

    wherein R represents hydrogen or $C_1$-$C_6$ alkyl; Y represents $CH_2$; n is an integer from 0 to 6; a, b, and c each are an integer from 0 to 300, wherein a, b and c are chosen such that the weight average molecular weight of the polyol does not exceed 32,000.; and
    b) an amine-containing curing agent,

    wherein said prepolymer has a NCO/OH equivalent ratio of from 2.0 to less than 4.5.

2. The polyether-containing polyureaurethane of claim 1, wherein the NCO/OH equivalent ratio is from 2.1 to 4.0.

3. The polyether-containing polyureaurethane of claim 1 wherein said polyisocyanate is chosen from aliphatic polyisocyanates, cycloaliphatic polyisocyanates, aromatic polyisocyanates, and mixtures thereof.

4. The polyether polyureaurethane of claim 3 wherein said polyisocyanate is chosen from aliphatic diisocyanates, cycloaliphatic diisocyanates, and mixtures thereof.

5. The polyether-containing polyureaurethane of claim 3 wherein said polyisocyanate is chosen from dicyclohexylmethane diisocyanate and isomeric mixtures thereof.

6. The polyether-containing polyureaurethane of claim 3 wherein said polyisocyanate is trans, trans isomer of 4,4'-methylenebis(cyclohexyl isocyanate).

7. The polyether-containing polyureaurethane of claim 3 wherein said polyisocyanate is chosen from 3-isocyanato-methyl-3,5,5-trimethyl cyclohexyl-isocyanate; meta-tetramethylxylene diisocyanate (1,3-bia(1-isocyanato-1-methylethyl)-benzene) and mixtures thereof.

8. The polyether-containing polyureaurethane of claim 1 wherein said polyether-containing polyol material has a number average molecular weight of from 2,000 to 15,000.

9. The polyether-containing polyureaurethane of claim 1, wherein said amine-containing curing agent is chosen from materials having the following chemical formula and mixtures thereof:

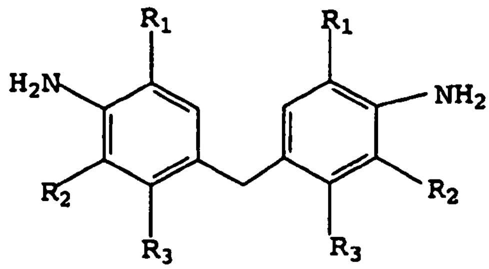

wherein $R_1$ and $R_2$ are each independently chosen from methyl, ethyl, propyl, and isopropyl groups, and $R_3$ is chosen from hydrogen and chlorine.

**10.** The polyether-containing polyureaurethane of claim 9 wherein said amine-containing curing agent is 4,4'-methylenebis(3-chloro-2,6-diethylaniline).

**11.** The polyether-containing polyureaurethane of claim 1, wherein said amine-containing curing agent is chosen from 2,4-diamino-3,5-diethyl-toluene, 2,6-diamino-3,5-diethyl-toluene and mixtures thereof.

**12.** The polyether-containing polyureaurethane of any of the preceding claims wherein said amine-containing curing agent is present in a $NCO/NH_2$ equivalent ratio of from 1.0 NCO/0.60 $NH_2$ to 1.0 NCO/1.20 $NH_2$.

**13.** The polyether-containing polyureaurethane of claim 1 having a viscosity of less than 2,000 cPs at 73°C.

**14.** A method of preparing a polyether-containing polyureaurethane comprising the steps of:

a) reacting a polyisocyanate with at least one polyether-containing polyol wherein said polyether polyol comprises a block copolymer of the following formula:

$$H\text{-}O\text{-}(CRRCRR\text{-}Y_n\text{-}O)_a\text{-}(CRRCRR\text{-}Y_n\text{-}O)_b\text{-}(CRRCRR\text{-}Y_n\text{-}O)_c\text{-}H$$

wherein R represents hydrogen or $C_1$-$C_6$ alkyl, Y represents $CH_2$; n is an integer from 0 to 6; a, b, and c each are an integer from 0 to 300, wherein a, b and c are chosen such that the weight average molecular weight of the polyol does not exceed 32,000 to form a polyether-containing polyurethane prepolymer; and

b) reacting said prepolymer with an amine-containing curing agent,

wherein said prepolymer has a NCO/OH equivalent ratio of from 2.0 to less than 4.5.

**15.** The method of claim 14, wherein the polyisocyanate, the polyether-containing polyol, the amine-containing curing agent and the $NCO/NH_2$ equivalent ratio is defined as in any of claims 2-12.

**16.** An optical article comprising the polyether-containing polyureaurethane of any of claims 1-13.

**17.** The article of claim 16 being photochromic.

## Patentansprüche

**1.** Polyetherhaltiges Polyharnstoffurethan, enthaltend das Reaktionsprodukt von:

a) einem Prepolymer, das ein Polyisocyanat und wenigstens ein polyetherhaltiges Polyol enthält, wobei dieses Polyetherpolyol ein Blockcopolymer der folgenden Formel enthält:

$$H\text{-}O\text{-}(CRRCRR\text{-}Y_n\text{-}O)_a\text{-}(CRRCRR\text{-}Y_n\text{-}O)_b\text{-}(CRRCRR\text{-}Y_n\text{-}O)_c\text{-}H,$$

worin R für Wasserstoff oder $C_1$- bis $C_6$-Alkyl steht, Y für $CH_2$ steht, n eine ganze Zahl von 0 bis 6 ist, a, b und

c jeweils ganze Zahlen von 0 bis 300 sind, wobei a, b und c so ausgewählt sind, dass das gewichtsmittlere Molekulargewicht des Polyols 32.000 nicht übersteigt, und
b) einem aminhaltigen Härtungsmittel,

wobei dieses Prepolymer ein NCO/OH-Äquivalentverhältnis von 2,0 bis weniger als 4,5 aufweist.

**2.** Polyetherhaltiges Polyharnstoffurethan nach Anspruch 1, wobei das NCO/OH-Äquivalentverhältnis von 2,1 bis 4,0 reicht.

**3.** Polyetherhaltiges Polyharnstoffurethan nach Anspruch 1, wobei dieses Polyisocyanat aus aliphatischen Polyisocyanaten, cycloaliphatischen Polyisocyanaten, aromatischen Polyisocyanaten und Mischungen davon ausgewählt ist.

**4.** Polyetherhaltiges Polyharnstoffurethan nach Anspruch 3, wobei dieses Polyisocyanat aus aliphatischen Diisocyanaten, cycloaliphatischen Diisocyanaten und Mischungen davon ausgewählt ist.

**5.** Polyetherhaltiges Polyharnstoffurethan nach Anspruch 3, wobei dieses Polyisocyanat aus Dicyclohexylmethandiisocyanat und isomeren Mischungen davon ausgewählt ist.

**6.** Polyetherhaltiges Polyharnstoffurethan nach Anspruch 3, wobei dieses Polyisocyanat das trans,trans-Isomer von 4,4'-Methylenbis(cyclohexylisocyanat) ist.

**7.** Polyetherhaltiges Polyharnstoffurethan nach Anspruch 3, wobei dieses Polyisocyanat aus 3-Isocyanato-methyl-3,5,5-trimethylcyclohexylisocyanat, meta-Tetramethylxyloldiisocyanat(1,3-Bis(1-isocyanato-1-methylethyl)benzol) und Mischungen davon ausgewählt ist.

**8.** Polyetherhaltiges Polyharnstoffurethan nach Anspruch 1, wobei dieses polyetherhaltige Polyolmaterial ein zahlenmittleres Molekulargewicht von 2.000 bis 15.000 aufweist.

**9.** Polyetherhaltiges Polyharnstoffurethan nach Anspruch 1, wobei dieses aminhaltige Härtungsmittel ausgewählt ist aus Stoffen mit der folgenden chemischen Formel und Mischungen davon:

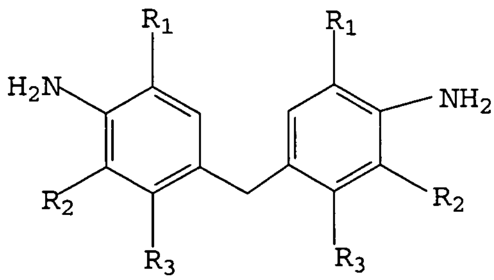

worin $R_1$ und $R_2$ jeweils unabhängig voneinander ausgewählt sind aus Methyl-, Ethyl-, Propyl- und Isopropylgruppen und $R_3$ ausgewählt ist aus Wasserstoff und Chlor.

**10.** Polyetherhaltiges Polyharnstoffurethan nach Anspruch 9, wobei dieses aminhaltige Härtungsmittel 4,4'-Methylenbis (3-chlor-2,6-diethylanilin) ist.

**11.** Polyetherhaltiges Polyharnstoffurethan nach Anspruch 1, wobei dieses aminhaltige Härtungsmittel aus 2,4-Diamino-3,5-diethyl-toluol, 2,6-Diamino-3,5-diethyltoluol und Mischungen davon ausgewählt ist.

**12.** Polyetherhaltiges Polyharnstoffurethan nach einem der vorstehenden Ansprüche, wobei dieses aminhaltige Härtungsmittel in einem $NCO/NH_2$-Äquivalentverhältnis von 1,0 NCO/0,60 $NH_2$ bis 1,0 NCO/1,20 $NH_2$ vorhanden ist.

**13.** Polyetherhaltiges Polyharnstoffurethan nach Anspruch 1 mit einer Viskosität von weniger als 2.000 cPs bei 73°C.

**14.** Verfahren zur Herstellung eines polyetherhaltigen Polyharnstoffurethans, umfassend die Schritte:

a) Umsetzen eines Polyisocyanats mit wenigstens einem polyetherhaltigen Polyol, wobei dieses Polyetherpolyol ein Blockcopolymer der folgenden Formel enthält:

$$H\text{-}O\text{-}(CRRCRR\text{-}Y_n\text{-}O)_a\text{-}(CRRCRR\text{-}Y_n\text{-}O)_b\text{-}(CRRCRR\text{-}Y_n\text{-}O)_c\text{-}H,$$

worin R für Wasserstoff oder $C_1$- bis $C_6$-Alkyl steht, Y für $CH_2$ steht, n eine ganze Zahl von 0 bis 6 ist, a, b und c jeweils ganze Zahlen von 0 bis 300 sind, wobei a, b und c so ausgewählt sind, dass das gewichtsmittlere Molekulargewicht des Polyols 32.000 nicht übersteigt, um ein polyetherhaltiges Polyurethanprepolymer zu bilden, und

b) Umsetzen dieses Prepolymers mit einem aminhaltigen Härtungsmittel,

wobei dieses Prepolymer ein NCO/OH-Äquivalentverhältnis von 2,0 bis weniger als 4,5 aufweist.

**15.** Verfahren nach Anspruch 14, wobei das Polyisocyanat, das polyetherhaltige Polyol, das aminhaltige Härtungsmittel und das $NCO/NH_2$-Äquivalentverhältnis wie in einem der Ansprüche 2-12 definiert sind.

**16.** Optischer Gegenstand, enthaltend das polyetherhaltige Polyharnstoffurethan nach einem der Ansprüche 1-13.

**17.** Gegenstand nach Anspruch 16, wobei dieser photochrom ist.

## Revendications

**1.** Polyurée-uréthane contenant un polyéther comprenant le produit réactionnel de :

a) un prépolymère comprenant un polyisocyanate et au moins un polyol contenant un polyéther, ledit polyéther polyol comprenant un copolymère séquencé de formule suivante :

$$H\text{-}O\text{-}(CRRCRR\text{-}Y_n\text{-}O)_a\text{-}(CRRCRR\text{-}Y_n\text{-}O)_b\text{-}(CRRCRR\text{-}Y_n\text{-}O)_c\text{-}H$$

dans laquelle R représente un atome d'hydrogène ou un groupe alkyle en $C_1$-$C_6$ ; Y représente $CH_2$ ; n est un nombre entier compris dans la plage allant de 0 à 6 ; a, b et c sont chacun un nombre entier compris dans la plage allant de 0 à 300, a, b et c étant choisis de sorte que le poids moléculaire moyen en poids du polyol ne soit pas supérieur à 32 000 ; et

b) un agent de durcissement contenant une amine,

dans lequel ledit prépolymère a un rapport en équivalent NCO/OH compris dans la plage allant de 2,0 à moins de 4,5.

**2.** Polyurée-uréthane contenant un polyéther selon la revendication 1, dans lequel le rapport en équivalent NCO/OH est compris dans la plage allant de 2,1 à 4,0.

**3.** Polyurée-uréthane contenant un polyéther selon la revendication 1, dans lequel ledit polyisocyanate est choisi parmi les polyisocyanates aliphatiques, les polyisocyanates cycloaliphatiques, les polyisocyanates aromatiques et des mélanges de ceux-ci.

**4.** Polyurée-uréthane contenant un polyéther selon la revendication 3, dans lequel ledit polyisocyanate est choisi parmi les diisocyanates aliphatiques, les diisocyanates cycloaliphatiques et des mélanges de ceux-ci.

**5.** Polyurée-uréthane contenant un polyéther selon la revendication 3, dans lequel ledit polyisocyanate est choisi parmi le dicyclohexylméthane diisocyanate et des mélanges isomères de celui-ci.

**6.** Polyurée-uréthane contenant un polyéther selon la revendication 3, dans lequel ledit polyisocyanate est trans, l'isomère trans du 4,4'-méthylènebis(isocyanate de cyclohexyle).

**7.** Polyurée-uréthane contenant un polyéther selon la revendication 3, dans lequel ledit polyisocyanate est choisi parmi l'isocyanate de 3-isocyanato-méthyl-3,5,5-triméthylcyclohexyle ; le méta-tétraméthylxylène diisocyanate (1,3-bis(1-isocyanato-1-méthyléthyl)benzène) et des mélanges de ceux-ci.

**8.** Polyurée-uréthane contenant un polyéther selon la revendication 1, dans lequel ledit polyol contenant un polyéther a un poids moléculaire moyen en nombre compris dans la plage allant de 2 000 à 15 000.

**9.** Polyurée-uréthane contenant un polyéther selon la revendication 1, dans lequel ledit agent de durcissement contenant une amine est choisi parmi les composés ayant la formule chimique suivante et des mélanges de ceux-ci:

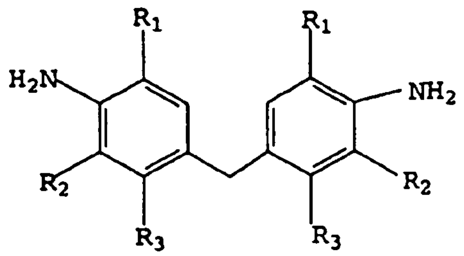

dans laquelle $R_1$ et $R_2$ sont chacun indépendamment choisis parmi les groupes méthyle, éthyle, propyle et isopropyle, et $R_3$ est choisi parmi un atome d'hydrogène et un atome de chlore.

**10.** Polyurée-uréthane contenant un polyéther selon la revendication 9, dans lequel ledit agent de durcissement contenant une amine est la 4,4'-méthylènebis(3-chloro-2,6-diéthylaniline).

**11.** Polyurée-uréthane contenant un polyéther selon la revendication 1, dans lequel ledit agent de durcissement contenant une amine est choisi parmi le 2,4-diamino-3,5-diéthyl-toluène ; le 2,6-diamino-3,5-diéthyl-toluène et des mélanges de ceux-ci.

**12.** Polyurée-uréthane contenant un polyéther selon l'une quelconque des revendications précédentes, dans lequel ledit agent de durcissement contenant une amine est présent selon un rapport en équivalent $NCO/NH_2$ compris dans la plage allant de 1,0 NCO/0,60 $NH_2$ à 1,0 NCO/1,20 $NH_2$.

**13.** Polyurée-uréthane contenant un polyéther selon la revendication 1, ayant une viscosité inférieure à 2 000 cPs à 73°C.

**14.** Procédé de préparation d'un polyurée-uréthane contenant un polyéther comprenant les étapes consistant à :

a) faire réagir un polyisocyanate avec au moins un polyol contenant un polyéther, ledit polyéther polyol comprenant un copolymère séquencé de formule suivante :

$$H\text{-}O\text{-}(CRRCRR\text{-}Y_n\text{-}O)_a\text{-}(CRRCRR\text{-}Y_n\text{-}O)_b\text{-}(CRRCRR\text{-}Y_n\text{-}O)_c\text{-}H$$

dans laquelle R représente un atome d'hydrogène ou un groupe alkyle en $C_1$-$C_6$ ; Y représente $CH_2$ ; n est un nombre entier compris dans la plage allant de 0 à 6 ; a, b et c sont chacun un nombre entier compris dans la plage allant de 0 à 300, a, b et c étant choisis de sorte que le poids moléculaire moyen en poids du polyol ne soit pas supérieur à 32 000, pour former un prépolymère de polyuréthane contenant un polyéther ; et
b) faire réagir ledit prépolymère avec un agent de durcissement contenant une amine,

dans lequel ledit prépolymère a un rapport en équivalent NCO/OH compris dans la plage allant de 2,0 à moins de 4,5.

**15.** Procédé selon la revendication 14, dans lequel le polyisocyanate, le polyol contenant un polyéther, l'agent de durcissement contenant une amine et le rapport en équivalent $NCO/NH_2$ sont définis selon l'une quelconque des revendications 2 à 12.

**16.** Article optique comprenant le polyurée-uréthane contenant un polyéther selon l'une quelconque des revendications 1 à 13.

**17.** Article selon la revendication 16, qui est photochrome.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2644007 A
- US 2680127 A
- US 2908703 A
- US 5962617 A
- US 5693738 A
- US 4756973 A
- US 5462806 A
- US 4731264 A
- US 5134191 A
- US 5231156 A
- US 6175450 B
- US 09793886 B
- US 09794026 B
- US 3562172 A
- US 3578602 A
- US 4215010 A
- US 4342668 A
- US 5405958 A
- US 4637698 A
- US 4931219 A
- US 4816584 A
- US 4880667 A
- US 4818096 A
- US 3567605 A
- US 4826977 A
- US 5066818 A
- US 5466398 A
- US 5384077 A
- US 5238931 A
- US 5274132 A
- US 5429774 A
- US 3361706 A
- US 4931220 A
- US 4166043 A
- US 4367170 A

### Non-patent literature cited in the description

- Ullmann's Encyclopedia of Industrial Chemistry. 1992, vol. A21, 673-674